# EUROPEAN PATENT SPECIFICATION

(11) **EP 4 324 634 B1**
(45) Date of publication and mention of the grant of the patent: **22.04.2026**
(21) Application number: 22788170.3
(22) Date of filing: 12.04.2022
(51) Int. Cl.: C08L 91/06, B29C 33/52, B29C 43/32, B29C 33/76, B29C 43/36, B29C 70/46, B29C 70/54, B29K 101/10, B29K 105/08, B29L 22/00

(54) **METHOD FOR MANUFACTURING FIBER-REINFORCED RESIN ARTICLE, AND FIBER-REINFORCED RESIN ARTICLE**
VERFAHREN ZUR HERSTELLUNG EINES FASERVERSTÄRKTEN HARZARTIKELS UND FASERVERSTÄRKTER HARZARTIKEL
PROCÉDÉ PERMETTANT DE FABRIQUER UN ARTICLE EN RÉSINE RENFORCÉ PAR DES FIBRES, ET ARTICLE EN RÉSINE RENFORCÉ PAR DES FIBRES

(30) Priority: 15.04.2021 JP 2021069190; 28.06.2021 JP 2021106583
(43) Date of publication of application: 21.02.2024
(73) Proprietor: Mitsubishi Chemical Corporation, Chiyoda-ku Tokyo 100-8251 (JP)
(72) Inventor: TAKANO, Tsuneo, Tokyo 100-8251 (JP); KAJI, Satoshi, Tokyo 100-8251 (JP); HONMA, Takashi, Tokyo 100-8251 (JP)
(74) Representative: Hoffmann Eitle
(86) International application number: PCT/JP2022/017618
(87) International publication number: WO 2022/220247

(56) References cited:
- WO-A1-00/18566
- WO-A1-2018/079824
- WO-A1-2020/184163
- WO-A1-2020/184163
- JP-A- 2019 188 707
- JP-A- H03 144 187
- JP-A- H06 218 830
- JP-A- H11 138 647
- JP-A- S6 013 514
- US-A1- 2011 163 480
- US-B1- 6 350 337

## Description

### [Technical Field]

The present invention mainly relates to a method for manufacturing a fiber-reinforced resin article, and a fiber-reinforced resin article.

### [Background Art]

Since fiber reinforced plastic (FRP) is lightweight and has excellent mechanical characteristics, it is used in various applications including reinforcements for automobiles, and the importance thereof has been increasing in recent years.

A method is proposed in which a prepreg preform is heated and cured in a press metal mold together with a core comprising a wax material to manufacture a fiber-reinforced resin article having a hollow structure part or a U-shaped cross-sectional structure part (WO 2018 079 824 A1).

WO 2020 184 163 A1 describes a method for manufacturing a fiber-reinforced resin product, the method having a core preparation step for preparing a core comprising a fusible part and an outer coat for covering the fusible part, a molding step for arranging a prepreg preforming body in a mold together with the core and heating and pressing in the mold to obtain a cured material, and a core removal step for removing the material of the fusible part from the cured material, at least a portion of the prepreg preforming body being pressed by expansion of the core in the molding step, wherein the fusible part comprises a first fusible part and a second fusible part having a higher melting temperature than the first fusible part, the material of the first fusible part and the material of the second fusible part are mutually incompatible, and, in the molding step, the first fusible part partially or completely melts, and the second fusible part does not partially or completely melt.

### [Summary of Invention]

### [Technical Problem]

A main object of the present invention is to provide an improvement relating to a method in which a prepreg preform is heated and cured in a press metal mold together with a core comprising a wax material to manufacture a fiber-reinforced resin article at least partially having a structure comprising a bent or curved wall surface, such as a hollow structure part or a U-shaped cross-sectional structure part.

An object of the present invention includes providing a technique for controlling a shape of a surface of a portion of a fiber-reinforced resin article manufactured by the above-described method, where the portion faces the core during molding.

The object achieved by each embodiment according to the present invention may be disclosed explicitly or implicitly in the present specification.

### [Solution to Problem]

The present invention is defined by the appended set of claims. According to an aspect according to the present invention, a manufacturing method for manufacturing a fiber-reinforced resin article is provided, the manufacturing method comprising a molding step of heating, in a press metal mold, a prepreg preform together with a core comprising a wax material to obtain a cured product and a core removal step of removing the core from the cured product, in which the core has an expansion part comprising a first wax material and a stamper part comprising a second wax material that is incompatible with the first wax material, the first wax material has a softening temperature lower than that of the second wax material, the stamper part is disposed on a surface of the core, and a portion mirroring a shape of a surface of the stamper part is formed on a surface of the cured product.

### [Effects of Invention]

An improvement relating to a method is provided in which a prepreg preform is disposed to be cured in a press metal mold together with a core comprising a wax material to manufacture a fiber-reinforced resin article at least partially having a structure comprising a bent or curved wall surface, such as a hollow structure part or a U-shaped cross-sectional structure part.

### [Brief Description of Drawings]

FIG. 1 is a flow chart of a method for manufacturing a fiber-reinforced resin article according to an embodiment.
FIG. 2 is a schematic view of an FRP article that can be manufactured by the method for manufacturing a fiber-reinforced resin article according to the embodiment, where FIG. 2(a) is a perspective view, and FIG. 2(b) is a cross-sectional view.
FIG. 3 is a schematic view of a core that can be used in the method for manufacturing a fiber-reinforced resin article according to the embodiment, where FIG. 3(a) is a perspective view, and FIG. 3(b) is a cross-sectional view.
FIG. 4 is a cross-sectional view of a prepreg preform that is prepared such that a core is disposed inside.
FIG. 5 is a cross-sectional view showing a state where the prepreg preform shown in FIG. 4 is put into a metal mold.
FIG. 6 shows a cross-sectional view of a cured product obtained from the prepreg preform shown in FIG. 4 before a core is removed from the inside of a cavity.
FIG. 7 is a cross-sectional view of an FRP article obtained from the prepreg preform shown in FIG. 4.
FIG. 8 is a schematic view of a core that can be used in the method for manufacturing a fiber-reinforced resin article according to the embodiment, where FIG. 8(a) is a perspective view, and FIG. 8(b) is a cross-sectional view.
FIG. 9 is a schematic view of a core that can be used in a method for manufacturing an FRP article according to the embodiment, where FIG. 9(a) is a perspective view, and FIG. 9(b) is a cross-sectional view.
FIG. 10 shows cross-sectional views for a process which is an example of a procedure for producing the core shown in FIG. 9.
FIG. 11 is a schematic view of a core that can be used in the method for manufacturing a fiber-reinforced resin article according to the embodiment, where FIG. 11(a) is a perspective view, and FIG. 11(b) is a cross-sectional view.
FIG. 12 is a schematic view of a core that can be used in the method for manufacturing a fiber-reinforced resin article according to the embodiment, where FIG. 12(a) is a perspective view, and FIG. 12(b) is a cross-sectional view.
FIG. 13 is a cross-sectional view of a prepreg preform that is prepared such that a core is disposed inside.
FIG. 14 is a cross-sectional view of a fiber-reinforced resin article obtained by using the core shown in FIG. 12.
FIG. 15 is a cross-sectional view showing a state where the surface of the core shown in FIG. 3 is covered with a barrier film.
FIG. 16 is a cross-sectional view showing a state where a prepreg preform is put into a metal mold together with the core covered with the barrier film.

### [Description of Embodiments]

### 1. Method for manufacturing fiber-reinforced resin article

One of the embodiments according to the present invention relates to a method for manufacturing a fiber-reinforced resin article (hereinafter, also referred to as an FRP article).

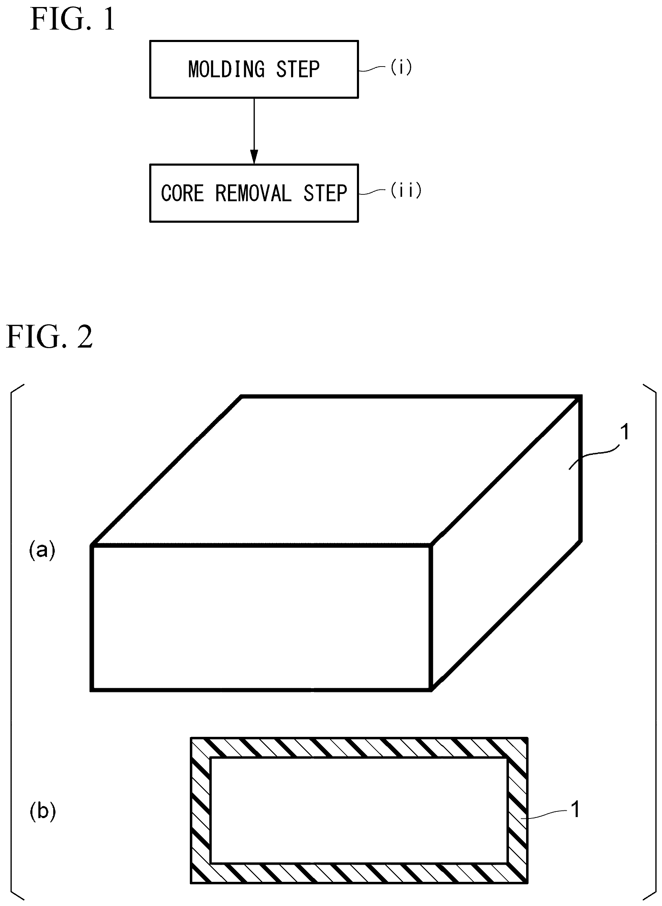

The method for manufacturing an FRP article according to the embodiment comprises the following two steps as shown in the flow shown in FIG. 1.
(i) A molding step of heating, in a press metal mold, a prepreg preform together with a core comprising a wax material to obtain a cured product.
(ii) A core removal step of removing the core from the cured product.

The core has an expansion part comprising a first wax material and a stamper part comprising a second wax material that is incompatible with the first wax material. The stamper part is disposed on the surface of the core, and a portion mirroring a surface shape of the stamper part is formed on the surface of the cured product obtained in the molding step.

Hereinafter, the method for manufacturing an FRP article according to the embodiment will be described in detail with reference to the drawings.

### 1. 1. Molding step

The molding step is a step of heating, in a press metal mold, a prepreg preform together with a core comprising a wax material to obtain a cured product.

### (Prepreg preform)

The prepreg preform is prepared in advance outside the press metal mold using a prepreg such as a prepreg sheet or a tow prepreg as a main material so that the prepreg preform has a near net shape.

When a prepreg sheet is used, two or more prepreg sheets may be laminated in a part or the whole of the prepreg preform. A portion where a plurality of prepreg sheets are laminated may include two or more sheets of the same kind of prepreg sheets, may include two or more kinds of prepreg sheets different from each other, or may include both.

A prepreg preform in which a prepreg sheet is used may have a portion reinforced with a tow prepreg.

A part or the whole of the prepreg preform may be formed of only a tow prepreg.

Various fiber-reinforcing materials such as continuous fibers, chopped fibers, woven fabrics, nonwoven fabrics, and non-crimp fabrics are used for prepregs.

A prepreg sheet having a fiber-reinforcing material which is obtained by aligning a plurality of continuous fiber bundles in one direction is called a unidirectional prepreg (UD prepreg).

A prepreg sheet using a woven fabric comprising continuous fiber bundles as a fiber-reinforcing material is called a cloth prepreg.

A prepreg sheet using a mat formed by depositing chopped fiber bundles as a fiber-reinforcing material is called a sheet molding compound (SMC).

A tow prepreg is a prepreg that uses a single continuous fiber bundle as a reinforcing material.

Examples of the fiber that is used in the fiber-reinforcing material include a carbon fiber, a glass fiber, an aramid fiber, a silicon carbide fiber, and a metal fiber. Two or more kinds of fibers may be used in combination.

Examples of the thermosetting resin that is used for a prepreg include an epoxy resin, a urea resin, a vinyl ester resin (also called an epoxy acrylate resin), unsaturated polyester, polyurethane, and a phenol resin. Two or more kinds of thermosetting resins may be used in combination.

The content of the thermosetting resin composition in the prepreg is not limited; however, it is, for example, 15% to 60% by mass. The content thereof may be 15% to 20% by mass, 20% to 25% by mass, 25% to 40% by mass, 40% to 50% by mass, 50% to 60% by mass, or the like.

Various additives can be added to the thermosetting resin composition. Examples thereof include a curing agent, a thickener, a reactive diluent, a flame retardant, an antifoaming agent, a defoaming agent, a mold release agent, a particulate filler, a coloring agent, a silane coupling agent, and an antibacterial agent.

### (Core)

An expansion part comprising a first wax material and a stamper part comprising a second wax material that is incompatible with the first wax material are provided in the core. The stamper part is disposed on the surface of the core.

The details of the first wax material and the second wax material will be described later.

For example, when an FRP article having a hollow structure part is to be manufactured, the overall shape of the core is set to be substantially the same as the shape of the cavity that is formed in the hollow structure part of the FRP article.

Here, an example of a disposition of the expansion part and the stamper part will be described using, as a model, a core to be used when manufacturing a square columnar hollow FRP article 1 shown in FIG. 2, in which the upper surface and the lower surface are square and four side surfaces are rectangular.

Similarly to the cavity of the FRP article 1, the overall shape of the core is a square columnar shape in which the upper surface and the lower surface are square and four side surfaces are rectangular.

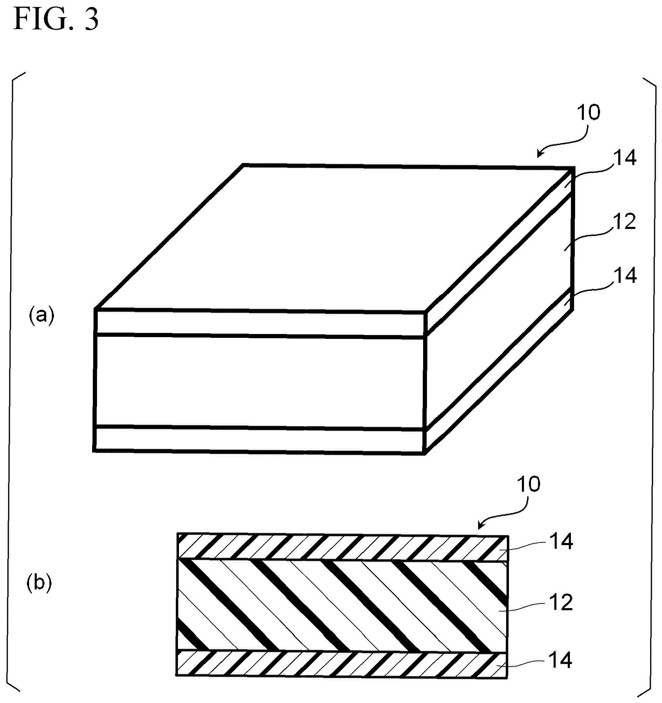

In an example, as shown in the cross-sectional view of FIG. 3, a core 10 may have a square columnar expansion part 12 and two plate-shaped stamper parts 14 disposed to cover each of the upper surface and the lower surface the square columnar expansion part 12. The expansion part 12 is exposed on the side surface of the core 10.

The expansion part 12 disposed in the center of the core 10 may be one in which the first wax material forms one lump or may be one in which a plurality of plates comprising the first wax material are stacked.

The core 10 can be obtained by separately producing the expansion part 12 and a plurality of the stamper parts 14 and then collecting them. The expansion part 12 and the stamper part 14 do not have to be adhered to each other.

### (Curing)

When an FRP article having a hollow structure part is to be manufactured, first, a prepreg preform is produced to be in a state where the core is disposed at a position corresponding to a cavity that is formed in the hollow structure part. Next, the prepreg preform produced in such a way is put into a press metal mold together with the core disposed on the inner side of the prepreg preform.

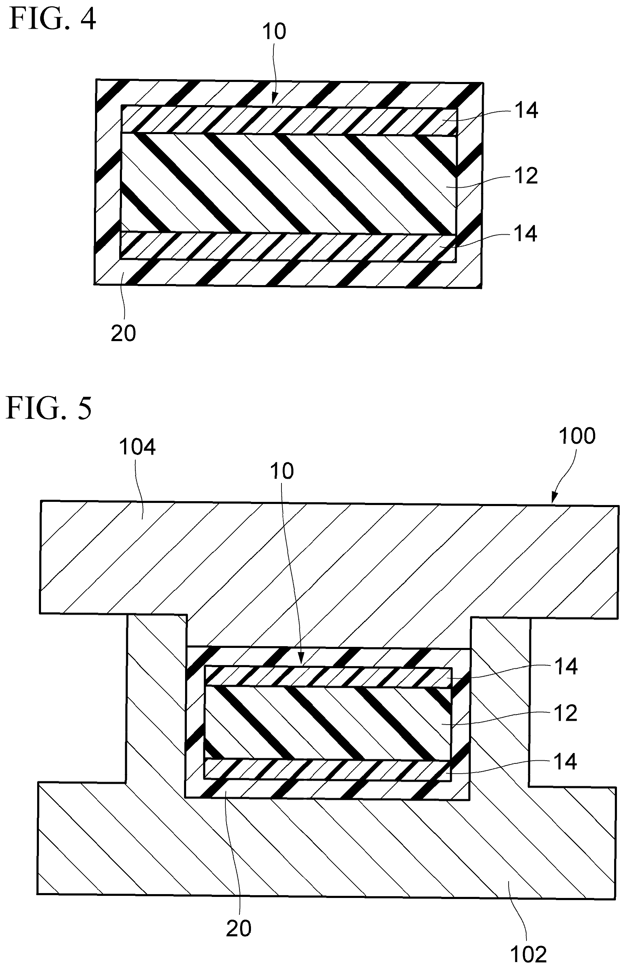

FIG. 4 is a cross-sectional view of a prepreg preform prepared for manufacturing the FRP article 1 shown in FIG. 2. The outer shape of a prepreg preform 20 is a square columnar shape, and the core 10 having the structure shown in FIG. 3 is disposed on the inner side.

In the present specification, the temperature of the press metal mold when curing a prepreg preform is referred to as a molding temperature.

The molding temperature may be any temperature at which the prepreg preform can be cured in preferably 1 hour or less, more preferably 40 minutes or less, and still more preferably 20 minutes or less.

The molding temperature is, for example, 100°C or higher, may be 120°C or higher and further, 130°C or higher. As the molding temperature becomes higher, the time required for curing the prepreg preform is shortened.

In a case where the molding temperature exceeds 160°C, the choices of the first wax material and the second wax material are restricted. From the viewpoint of shortening the time required for heating the press metal mold and reducing energy consumption, the molding temperature can be set to 150°C or lower and further, 140°C or lower.

Before the prepreg preform is put into the press metal mold, the temperature of the press metal mold is held at the molding temperature by a temperature control mechanism that is usually provided in a press metal molding machine.

FIG. 5 shows a state where the prepreg preform 20 shown in FIG. 4 has been put into, together with the core 10, a press metal mold 100 comprising a lower mold 102 and an upper mold 104.

Since the press metal mold 100 is held at the molding temperature in advance, a rise of the temperature of the core 10 and an expansion associated with the rise of the temperature start immediately after the core 10 is put into the press metal mold 100 together with the prepreg preform 20.

The expansion of the core 10 presses the prepreg preform 20 against the inner surface of the press metal mold 100. In other words, the core 10 attempts to expand against the mold clamping force, whereby the pressure generated in the press metal mold 100 is applied to the prepreg preform 20.

The prepreg is cured in a pressurized state, whereby an FRP having few voids is made.

Here, the first wax material and the second wax material will be described as follows.

The first wax material has a softening temperature lower than that of the second wax material. A sufficient difference is provided between the softening temperature of the first wax material and the softening temperature of the second wax material such that the second wax material is not softened at the stamper part before the first wax material is softened at the expansion part.

This means that the expansion of the expansion part mainly contributes to the generation of the pressure in the press metal mold. When the first wax material starts to soften in a part of the expansion part, the pressure in the press metal mold rapidly increases.

Further, it is also required that the expansion associated with the softening of the first wax material starts before the plasticity of the prepreg preform is lost due to the progression of curing.

One means for accelerating the softening of the first wax material is to decrease the softening temperature of the first wax material.

Another means for accelerating the softening of the first wax material is to bring the temperature of the core close to the softening temperature of the first wax material in advance by carrying out preheating before being put into the press metal mold. When carrying out preheating, it suffices that the core in a state of being disposed inside the prepreg preform be put into an oven together with the prepreg preform.

These two means can be adopted at the same time.

It is preferable that it take a long time from the start of softening of the first wax material to the fusion of the first wax material to a liquid having high fluidity. When this time is sufficiently long, the prepreg preform is cured before the first wax material fuses, and thus the fused first wax material does not flow into the gap between the prepreg preform and the press metal mold.

A wax that is preferably blended in the first wax material is a polyolefin wax from the viewpoint that the time from softening to fusion is long. Typical examples of the polyolefin wax include a polyethylene wax and a polypropylene wax. Suitable examples of the polyolefin wax include a thermal decomposition type polyethylene wax which is a thermal decomposition product of a polyethylene resin and a thermal decomposition type polypropylene wax which is a thermal decomposition product of a polypropylene resin.

It is preferable that the second wax material not soften at the molding temperature, which is not essential. Since the heat from the press metal mold is transferred to the stamper part through the prepreg preform, it takes time for the temperature of the stamper part to reach the molding temperature after the press metal mold is closed. Therefore, in a case where the softening of the first wax material is sufficiently fast, the pressure in the press metal mold may rise before the second wax material softens at the stamper part even in a case where the softening temperature of the second wax material is lower than the molding temperature.

Since the pressure in the press metal mold increases before the prepreg preform loses plasticity and before the second wax material softens at the stamper part, the surface of the prepreg preform is deformed to be along the surface of the stamper part, in a portion in contact with the stamper part. As a result, a portion mirroring the shape of the surface of the stamper part is formed on the surface of the cured product.

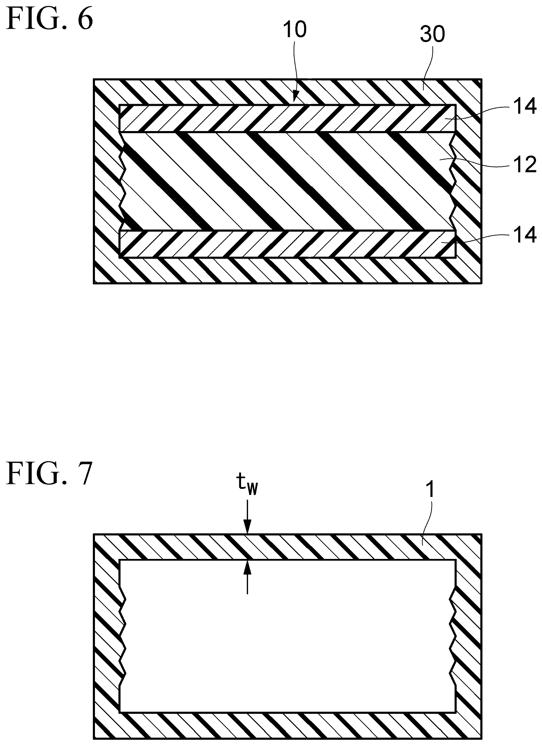

For example, when the prepreg preform 20 shown in FIG. 4 is cured in the press metal mold, an inner surface of a cured product 30 becomes flatter, as shown in FIG. 6, in a portion in contact with the stamper part 14 as compared with a portion in contact with the expansion part 12.

The reason the flatness of the inner surface of the cured product 30 is inferior in the portion of the core 10 in contact with the expansion part 12 is that the rise of the pressure in the press metal mold 100 in the molding step is mainly caused by the softening of the surface of the expansion part 12. Even in a case where the softened surface of the expansion part 12 is pressed, the shape of the inner surface of the prepreg preform 20 does not change significantly.

### 1. 2. Core removal step

The core removal step (ii) is a step of removing the core used in the molding step from the cured product obtained in the molding step.

When the cured product has a hollow structure part, the first wax material and the second wax material, which are materials of the core, are removed from the inside of the cavity formed in the hollow structure part of the cured product.

Although not limited, in an example, first, a cured product is heated in an oven to fuse the first wax material and the second wax material in the cavity, and next, a discharge hole is provided in the hollow structure part by using a drilling tool. The fused first wax material and second wax material can be discharged to the outside of the cavity through the discharge hole.

The core can be removed by fusing the first wax material and the second wax material not only when the cured product has a hollow structure part but also when the cured product has an undercut part. When the cured product has neither the hollow structure part nor the undercut part, the core may be removed without fusion.

FIG. 7 shows a cross section of the FRP article 1 obtained by removing the core 10 from the inside of the cavity of the cured product 30 shown in FIG. 6.

As can be seen from FIG. 7, the flattening of the inner surface (the wall surface of the cavity) of the FRP article 1 by using the core 10 comprising the expansion part 12 and the stamper part 14 contributes to the improvement of the uniformity of the wall thickness t_{W} of the FRP article 1. The improvement of the uniformity of the wall thickness t_{W} can contribute to the reduction of the variation of the mechanical characteristics and the strength of the FRP article 1.

This effect is particularly remarkable when the prepreg preform 20 comprises the SMC. This is because, among various kinds of prepreg sheets, the SMC has a large in-plane thickness variation range.

Since the first wax material and the second wax material are incompatible with each other, they can be easily separated and reutilized.

When the melting points of the first wax material and the second wax material are sufficiently different from each other, the two can be separated by fusing only the one having the lower melting point.

When the specific gravities of the fused first wax material and the fused second wax material are different from each other, the difference between the specific gravities can be utilized to separate the first wax material and the second wax material.

A wax containing a hydrocarbon as a main component and a wax comprising an organic compound having a polar group are often incompatible with each other. The polar group is a functional group (excluding an ether group) containing a carbon-oxygen bond or a carbon-nitrogen bond, such as a hydroxyl group, an amino group, an amide group, a carbonyl group, a carboxyl group, or an ester group.

When the polyolefin wax is blended in the first wax material, a wax containing an organic compound having a polar group is preferably blended in the second wax material.

Typical examples of the wax containing an organic compound having a polar group include a wax containing one or more organic compounds selected from a hydroxy fatty acid amide, a fatty acid amide, a hydroxy fatty acid ester, and a fatty acid ester.

### 1. 3. Various other embodiments

The core to be used at the time of manufacturing the FRP article 1 shown in FIG. 2 is not limited to the core having the structure shown in FIG. 3.

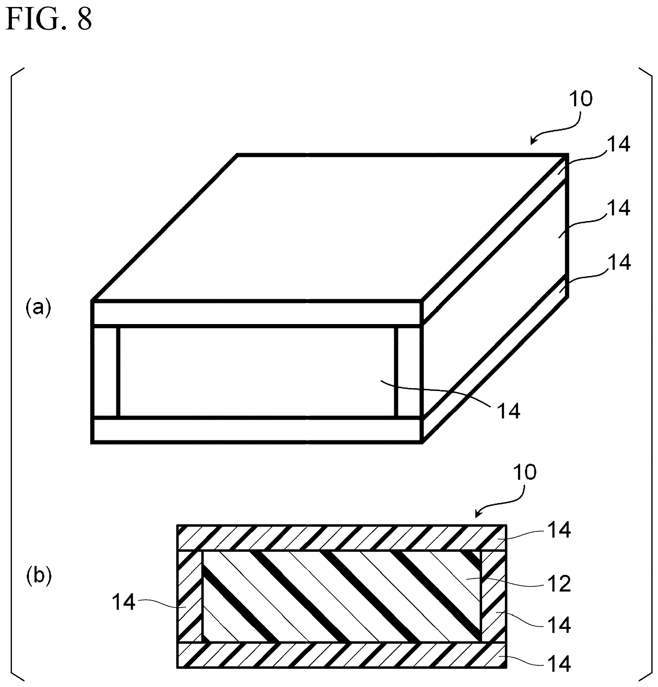

In a suitable example, as shown in FIG. 8, the core may have a structure in which, in addition to the upper surface and the lower surface of the square columnar expansion part 12, the four side surfaces are also covered with the plate-shaped stamper part 14. Since the core 10 shown in FIG. 8 does not have a portion where the expansion part 12 is exposed on the surface, in the FRP article 1 manufactured by the above-described method using the core 10, the flatness is improved on the entire inner surface.

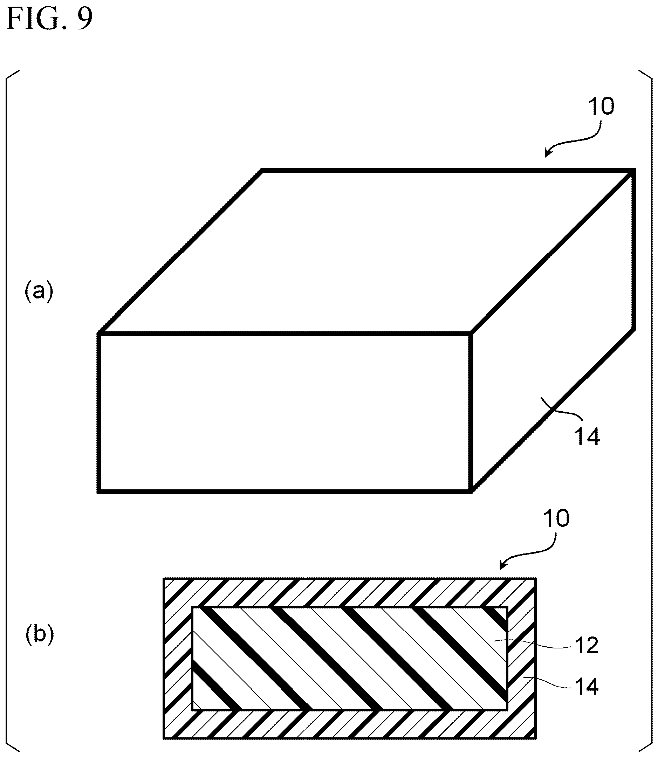

The core 10 shown in FIG. 9 is a modification example of the core shown in FIG. 8, where the entire surface of the expansion part 12 is covered by the stamper part 14 which is integrally formed.

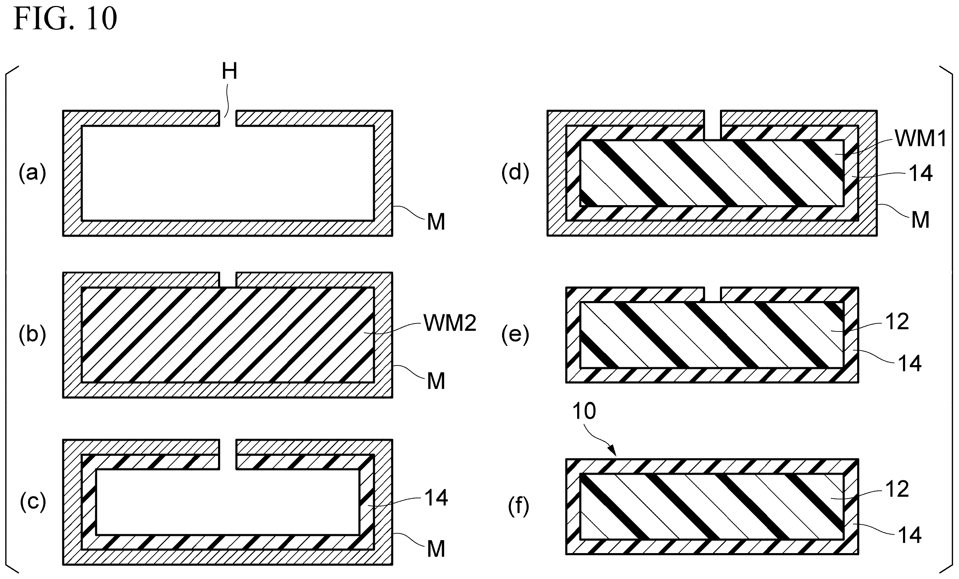

The core 10 shown in FIG. 9 can be prepared according to the procedure shown in FIG. 10.

First, as shown in FIG. 10(a), a molding die M is prepared with an injection/discharge hole H which has an inner dimension slightly larger than the outer dimensions of the core 10 to be manufactured.

As shown in FIG. 10(b), the fused second wax material WM2 is injected into this molding die M through the injection/discharge hole H. In this case, in a case where the molding die M is suitably cooled, a part of the second wax material is solidified on the wall surface of the molding die M. The stamper part 14 is formed as shown in FIG. 10(c) by discharging the remaining second wax material that has not yet solidified from the molding die M through the injection/discharge hole H.

Next, a fused first wax material WM1 is injected into the molding die M as shown in FIG. 10(d) through the injection/discharge hole H. In this case, the temperature of the first wax material WM1 is set to a temperature at which the second wax material does not fuse in the stamper part 14.

After the first wax material WM1 has been solidified to form the expansion part 12, the core 10 is taken out from the molding die M as shown in FIG. 10(e).

Finally, the hole remaining in the stamper part 14 is filled with the second wax material as shown in FIG. 10(f), thereby completing the formation of the core 10.

This method for producing a core is also convenient when the outer shape of the core is complicated or when the core has a curved surface portion on the surface.

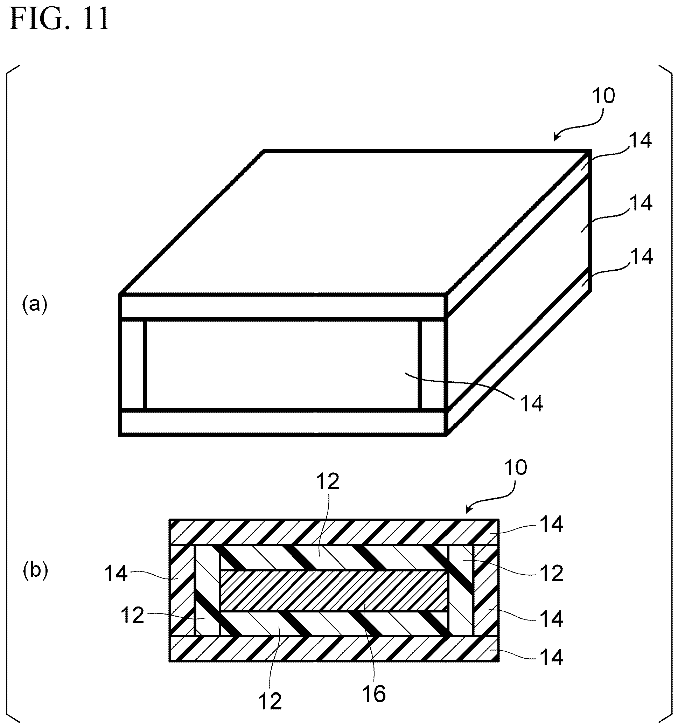

The core 10 shown in FIG. 11 is another modification example of the core shown in FIG. 8, where the square columnar low expansion part 16 comprising the second wax material is disposed in the center. A plurality of the plate-shaped expansion parts 12 are disposed to cover each of the upper surface, the lower surface, and the four side surfaces of the low expansion part 16, and further, a plurality of the plate-shaped stamper parts 14 are disposed on the outside of the plurality of the plate-shaped expansion parts 12. The expansion part 12 is not exposed on the surface of the core 10.

The reason the low expansion part 16 is disposed in the center of the core 10 shown in FIG. 11 is that the volume ratio of the expansion part 12 to the core 10 is reduced so that the expansion amount of the core 10 in the molding step does not become excessively large.

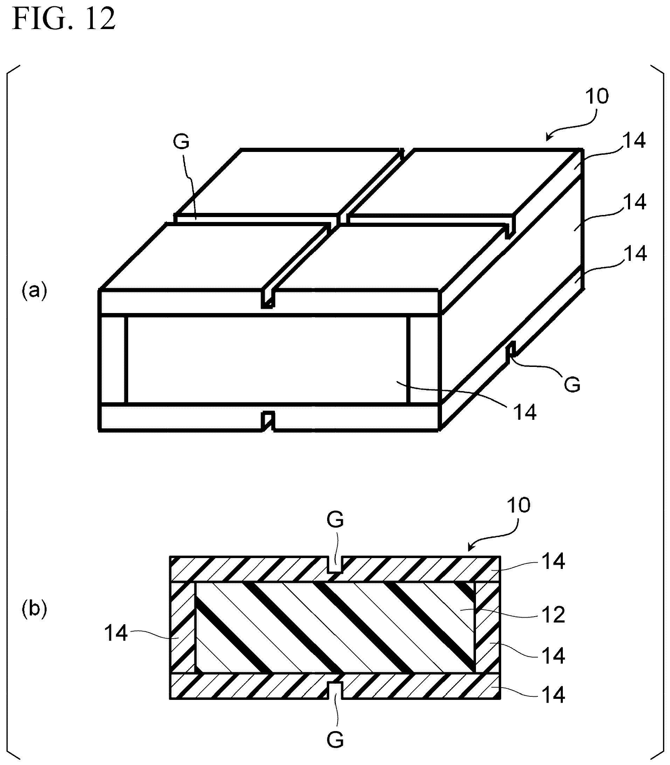

The core 10 shown in FIG. 12 is still another modification example of the core shown in FIG. 8, where a cross groove G is provided on the surface of the stamper part 14 on each of the upper surface and the lower surface.

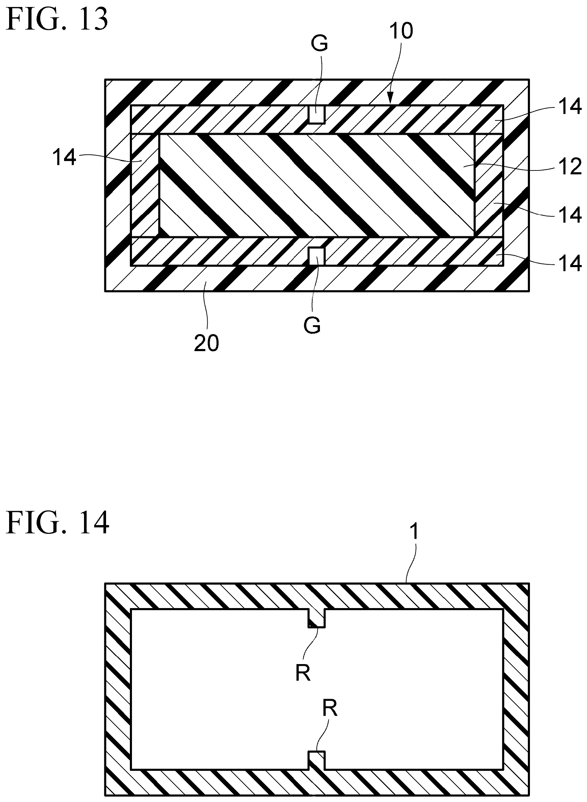

The cross groove G is provided for the purpose of forming a rib in a cross shape on the wall surface in the cavity of the FRP article 1 to be manufactured. As shown in FIG. 13, the prepreg preform 20 in which the core shown in FIG. 12 is disposed on the inner side is not shaped to be along the inner surface of the cross groove G, and the upper surface and the lower surface thereof are flat.

In the molding step, a part of the prepreg material constituting the prepreg preform 20 flows into the inside of the cross groove G. In particular, when the prepreg preform 20 comprises the SMC, the inside of the groove is likely to be sufficiently filled with the prepreg material.

In an example, at the stage of producing the prepreg preform 20, the inside of the cross groove G may be filled with a prepreg material prepared in advance separately from the prepreg preform 20.

The FRP article 1 of which the cross section is shown in FIG. 13 is manufactured by using the core 10 shown in FIG. 12 and has a rib R formed in a cross shape on each of the ceiling surface and the bottom surface of the cavity.

The pattern of the groove provided in the core 10 shown in FIG. 12 is merely an example. The pattern of the groove that can be formed on the surface of the stamper part for providing a rib on the FRP article is not limited and may be various patterns such as a rectangular lattice pattern, a triangular lattice pattern, a radiation pattern, and a stripe pattern. A plurality of regions in which groove patterns different from each other are formed can also be provided on the surface of the stamper part.

The groove depths in different grooves may be the same or may be different from each other. It is not essential that the depth of one groove be constant.

In a case of forming a rib, it is possible to achieve the weight reduction of the FRP article by reducing the wall thickness while maintaining the rigidity.

In addition to the groove for forming a rib or instead of the groove for forming a rib, a recessed part for forming a boss on the wall surface in the cavity of the FRP article to be manufactured may be provided on the surface of the stamper part.

Various additives can be added to the core as necessary.

In an example, the expansion part is capable of being subjected to induction heating by adding, to the first wax material, particles of a material having a property of generating heat in a high-frequency electromagnetic field. Examples of such a material include a ferromagnetic material, a ferrimagnetic material, and a conductive material. Examples of the ferromagnetic material include iron, nickel, cobalt, an iron alloy, a nickel alloy, a cobalt alloy, a permalloy, and many steels. Examples of the ferrimagnetic material include magnetite, nickel-zinc ferrite, manganese-zinc ferrite, and copper-zinc ferrite. Examples of the conductive material include copper, aluminum, and brass.

In another example, the expansion part is capable of being subjected to microwave heating by adding, to the first wax material, particles of a material having a property of absorbing microwaves to generate heat. Examples of such a material include silicon carbide, ferrite, barium titanate, anatase-type titanium oxide, graphite, and carbon black.

The induction heating or microwave heating of the expansion part can be preferably carried out when the expansion part is preheated outside the press metal mold.

**In** an example, particles of a material having a property of generating heat in a high-frequency electromagnetic field or particles of a material having a property of absorbing microwaves to generate heat may be added to both the first wax material and the second wax material so that the entire core can be subjected to induction heating or microwave heating. **In** such a case, induction heating or microwave heating can be utilized to fuse the entire core in the core removal step.

**In** an example, a coloring agent such as a pigment or a dye can be used so that the first wax material and the second wax material are visually distinguishable due to the color difference. The coloring agent may be added to any one of the first wax material and the second wax material or may be added to both thereof.

**In** a case of making the colors of the first wax material and the second wax material different from each other, it is possible to prevent the expansion part and the stamper part from being mistakenly confused with each other, for example, in a case of assembling the core.

Also in the work of separating the first wax material and the second wax material after the core removal step, it is convenient that the colors of the first wax material and the second wax material be different from each other.

**In** an example, the core may be used after covering the surface with a barrier film.

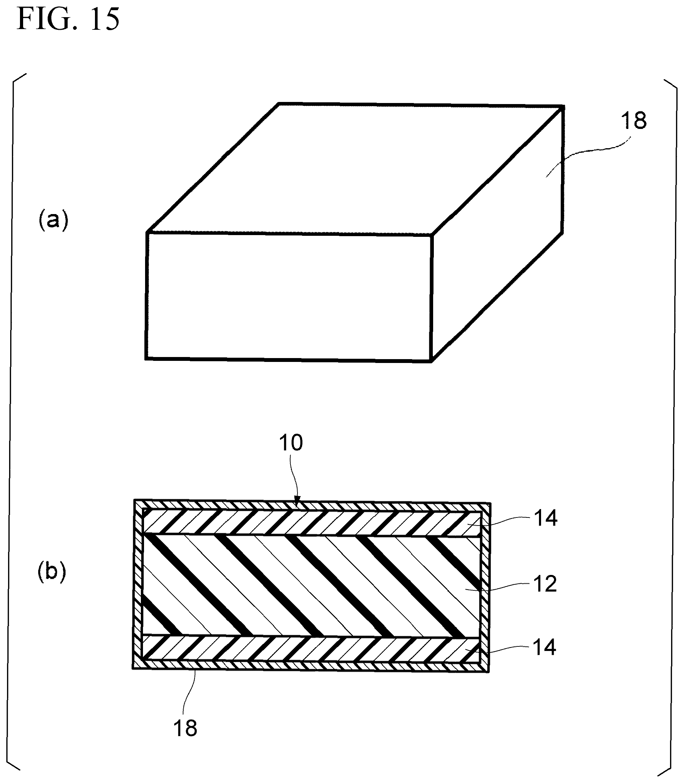

FIG. 15 shows a state where the surface of the core shown in FIG. 3 is covered with a barrier film. A barrier film 18 is in close contact with the core 10 and is conformal to the surface of the core 10.

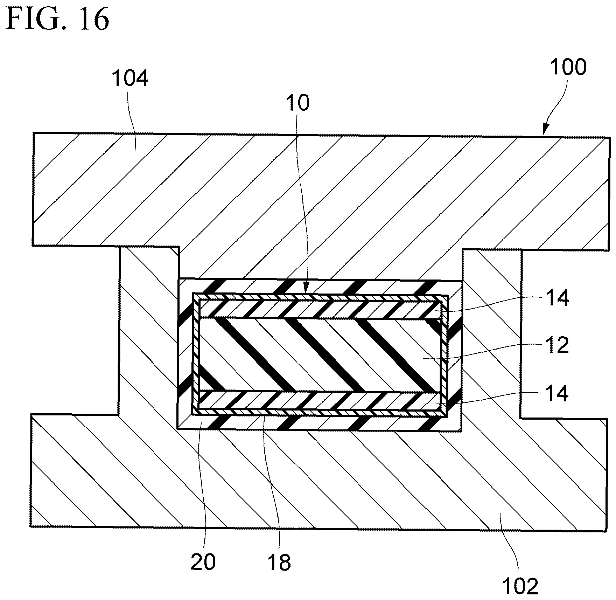

FIG. 16 shows a state where the prepreg preform 20 has been put into the press metal mold 100 together with the core 10 covered with the barrier film 18.

The purpose of the barrier film 18 is to prevent the first wax material from leaking into a gap between the prepreg preform 20 and the press metal mold when the first wax material forming the expansion part 12 has fused before the prepreg preform 20 is cured.

A material capable of undergoing extensional deformation at the molding temperature is used for the barrier film so that breaking due to the expansion of the core does not occur. This extensional deformation may be elastic, may be plastic, or may have both properties.

As a result, the preferred material of the barrier film is not limited; however, it is preferably an organic material and particularly preferably a resin material. Examples of the preferred material of the barrier film include synthetic polymers such as polyolefin, polyamide, polyester, polyurethane, silicone, and a fluororubber, and further include elastomers comprising these polymers.

The thickness of the barrier film may be in any range as long as the above-described object is achieved, and the thickness of the barrier film is not limited. However, it may be, for example, 0.05 to 1 mm, may be 0.5 mm or less, and further may be 0.1 mm or less.

In an example, the barrier film can be formed by subjecting a shrink tube comprising a polymer to thermal shrinking around the core.

In another example, the barrier film can be formed by applying a liquid rubber onto the surface of the core and carrying out drying.

In still another example, the barrier film can also be formed from a UV-curable elastomer.

The liquid barrier film raw material can be applied onto the core surface preferably by spraying.

### 1. 4. Scope of application

The scope of application of the method for manufacturing an FRP article according to the embodiment is not limited to the manufacturing of the FRP article having the specific shape exemplified in the above description. The method for manufacturing an FRP article according to the embodiment can be applied to the manufacturing of any FRP article at least partially having a structure comprising a bent or curved wall surface.

Typical examples of the structure comprising a bent or curved wall surface include a hollow structure, a cylindrical structure, a U-shaped cross-sectional structure, and an L-shaped cross-sectional structure. Various undercut parts also often have a bent or curved wall surface in the structure.

The method for manufacturing an FRP article according to the embodiment can also be applied when an FRP article having a large size is manufactured from two or more partial prepreg preforms.

In the FRP article manufactured by the method for manufacturing an FRP article according to the embodiment, the FRP may be molded so that a composite body is formed with a component comprising a material other than the FRP, such as metal.

### 2. Experimental results

The results of experiments carried out by the inventors of the present invention are shown below.

### 2. 1. Experiment 1

A hollow rectangular parallelepiped having outer dimensions of 300 mm × 100 mm × 30 mm was produced as an FRP article.

Two sheets of an SMC (STR120N131 manufactured by Mitsubishi Chemical Corporation) obtained by impregnating a chopped carbon fiber mat with an epoxy acrylate resin and having a fiber content of 53% by mass and a thickness of about 2 mm were stacked and then cut into a predetermined shape, and the cut piece was folded, whereby a prepreg preform having a near net shape was produced.

When producing the prepreg preform, a separately prepared core having a rectangular parallelepiped shape was disposed inside the prepreg preform in a state where the surface was covered with a barrier film. Using a thermal decomposition type polypropylene wax [VISCOL (registered trade name) manufactured by Sanyo Chemical Industries, Ltd.] having a melting point of 123°C, the core was produced with a mold to have dimensions such that the core was just within the inside of the prepreg preform when the surface was covered with a barrier film. As the barrier film, an elastic film made of nylon [Stretchlon (registered trade name) 800], manufactured by Airtech International Inc.) was used.

The prepreg preform in which the core was disposed inside was put into a metal mold that had been heated to the molding temperature in advance and was heated to be cured. The molding temperature was set to 140°C, and the molding time was set to 10 minutes.

The cured product taken out from the metal mold was heated to 150°C in an oven to fuse the wax for forming the core, and then a discharge hole having a diameter of 10 mm was drilled in the cured product to discharge the wax.

The obtained hollow rectangular parallelepiped had a favorable external appearance, and the shape and dimensions were as designed.

Using a surface roughness measuring instrument [SURFCOM (registered trade name) 1400LCD, manufactured by TOKYO SEIMITSU CO., LTD.], the arithmetic average roughness (reference length: 50 mm) in the central part of the wall surface (a wall surface of approximately 300 mm × 100 mm) of the cavity was measured, and as a result, it was 45 µm.

### 2. 2. Experiment 2

A hollow rectangular parallelepiped comprising FRP was produced in the same manner as in Experiment 1, except that the core to be used was changed.

The core used in Experiment 2 was produced according to the procedure shown in FIG. 10 and had a structure in which the entire surface of the expansion part comprising the thermal decomposition type polypropylene wax was densely covered by a stamper layer comprising another wax that was incompatible with this thermal decomposition type polypropylene wax.

The thermal decomposition type polypropylene wax was the same as that used in Experiment 1.

A synthetic wax (ITOWAX J-530, manufactured by ITOH OIL CHEMICALS CO., LTD.) containing N,N'-ethylene-bis-12-hydroxystearylamide as a main component and having a melting point of 142°C was used to form the stamper part. The thickness of the stamper part was approximately 2 mm.

The outer dimensions of the core were substantially the same as those of the core produced in Experiment 1.

The obtained hollow rectangular parallelepiped had a favorable external appearance, and the shape and dimensions were as designed.

As a result of measuring the arithmetic average roughness of the wall surface of the cavity in the same manner as in Experiment 1, it was 12 µm.

### 2. 3. Experiment 3

A hollow rectangular parallelepiped comprising FRP was produced in the same manner as in Experiment 2, except that the wax to be used for the expansion part of the core was changed from the thermal decomposition type polypropylene wax to a thermal decomposition type polyethylene wax [SANWAX (registered trade name) 151-P] manufactured by Sanyo Chemical Industries, Ltd.] having a melting point of 107°C.

The obtained hollow rectangular parallelepiped had a favorable external appearance, and the shape and dimensions were as designed.

As a result of measuring the arithmetic average roughness of the wall surface of the cavity in the same manner as in Experiment 1, it was 10 µm.

### 2. 4. Experiment 4

A hollow rectangular parallelepiped comprising FRP was produced in the same manner as in Experiment 2, except that the expansion part of the core was formed using a wax material obtained by blending a thermal decomposition type polypropylene wax [VISCOL (registered trade name) manufactured by Sanyo Chemical Industry Co., Ltd.] and a thermal decomposition type polyethylene wax [SANWAX 151-P manufactured by Sanyo Chemical Industry Co., Ltd.] at a weight ratio of 1:1.

The obtained hollow rectangular parallelepiped had a favorable external appearance, and the shape and dimensions were as designed.

The wall surface of the cavity was flatter than that of the FRP article produced in Experiment 1.

The present invention has been described above in line with the specific embodiments; however, each of the embodiments has been suggested as an example and thus is not intended to limit the scope of the present invention, which is defined by the appended set of claims.

### [Industrial Applicability]

The invention disclosed in the present specification can be preferably used, for example, in a case where components (including structural components) for automobiles, ships, railway vehicles, aircraft, unmanned aerial vehicles, and other transportation equipment, as well as various sports goods including bicycle frames, tennis rackets, and golf shafts are manufactured with fiber reinforced plastics.

### [Reference Signs List]

1: Fiber-reinforced resin article (FRP article)
10: Core
12: Expansion part
14: Stamper part
16: Low expansion part
18: Barrier film
20: Prepreg preform
30: Cured product
100: Press metal mold
102: Lower mold
104: Upper mold

## Claims

1. A manufacturing method for manufacturing a fiber-reinforced resin article (1), the manufacturing method comprising:
a molding step of heating, in a press metal mold (100), a prepreg preform (20) together with a core (10) comprising a wax material to obtain a cured product (30); and
a core removal step of removing the core from the cured product,
wherein the core (10) has an expansion part (12) comprising a first wax material and a stamper part (14) comprising a second wax material that is incompatible with the first wax material, the stamper part (14) is disposed on a surface of the core (10), and a portion mirroring a shape of a surface of the stamper part (14) is formed on a surface of the cured product (30),
**characterized in that** the first wax material has a softening temperature lower than that of the second wax material.

2. The manufacturing method according to Claim 1,
wherein the expansion part (12) is not exposed on the surface of the core (10).

3. The manufacturing method according to Claim 1 or 2,
wherein the core (10) further has a low expansion part (16) comprising the second wax material having a higher softening temperature than the first wax material inside the expansion part.

4. The manufacturing method according to any one of Claims 1 to 3,
wherein the core (10) has a groove (G) for forming a rib (R), which is provided on the surface of the stamper part (14), or a groove pattern for forming a rib pattern, which is provided on the surface of the stamper part (14), or a recessed part for forming a boss, which is provided on the surface of the stamper part (14).

5. The manufacturing method according to Claim 4,
wherein the groove pattern includes one or more selected from a rectangular lattice pattern, a triangular lattice pattern, a radiation pattern, and a stripe pattern.

6. The manufacturing method according to any one of Claims 1 to 3,
wherein the surface of the stamper part (14) is flat.

7. The manufacturing method according to any one of Claims 1 to 3,
wherein the core (10) has a protrusion or a depression, which is provided on the surface of the stamper part (14).

8. The manufacturing method according to any one of Claims 1 to 7,
wherein the surface of the core (10) is covered with a barrier film (18) before the molding step.

9. The manufacturing method according to any one of Claims 1 to 8,
wherein the prepreg preform (20) comprises an SMC.

10. The manufacturing method according to any one of Claims 1 to 9,
wherein the core (10) is preheated before the molding step.

11. The manufacturing method according to any one of Claims 1 to 10,
wherein a polyolefin wax is blended in the first wax material.

12. The manufacturing method according to Claim 11,
wherein a polypropylene wax or a polyethylene wax is blended in the first wax material as the polyolefin wax.

13. The manufacturing method according to any one of Claims 11 or 12,
wherein the second wax material contains an organic compound having a polar group.

14. The manufacturing method according to any one of Claims 1 to 13,
wherein one or both of the first wax material and the second wax material contain a coloring agent so that the first wax material and the second wax material are visually distinguishable.

15. The manufacturing method according to any one of Claims 1 to 14,
wherein the expansion part (12) contains particles of a material having a property of generating heat in a high-frequency electromagnetic field, or particles of a material having a property of absorbing microwaves to generate heat.

## Patentansprüche

1. Herstellungsverfahren zum Herstellen eines faserverstärkten Harzartikels (1), wobei das Herstellungsverfahren umfasst:
einen Formschritt des Erhitzens, in einer Pressmetallform (100), einer Prepreg-Vorform (20) zusammen mit einem ein Wachsmaterial umfassenden Kern (10), um ein ausgehärtetes Produkt (30) zu erhalten; und
einen Kernentfernungsschritt des Entfernens des Kerns aus dem ausgehärteten Produkt,
wobei der Kern (10) einen Expansionsteil (12), der ein erstes Wachsmaterial umfasst, und einen Stempelteil (14) aufweist, der ein zweites Wachsmaterial umfasst, das inkompatibel mit dem ersten Wachsmaterial ist, wobei der Stempelteil (14) auf einer Oberfläche des Kerns (10) angeordnet wird, und auf einer Oberfläche des ausgehärteten Produkts (30) ein Abschnitt, der eine Form einer Oberfläche des Stempelteils (14) widerspiegelt, gebildet wird,
**dadurch gekennzeichnet, dass** das erste Wachsmaterial eine Erweichungstemperatur niedriger als die des zweiten Wachsmaterials aufweist.

2. Verfahren zur Herstellung nach Anspruch 1,
wobei der Expansionsteil (12) auf der Oberfläche des Kerns (10) nicht freiliegt.

3. Verfahren zur Herstellung nach Anspruch 1 oder 2,
wobei der Kern (10) innerhalb des Expansionsteils weiter einen Niedrigexpansionsteil (16) aufweist, der ein zweites Wachsmaterial umfasst, das eine höhere Erweichungstemperatur als das erste Wachsmaterial aufweist.

4. Verfahren zur Herstellung nach einem der Ansprüche 1 bis 3,
wobei der Kern (10) eine Nut (G) zum Bilden einer Rippe (R), die auf der Oberfläche des Stempelteils (14) vorgesehen ist, oder ein Nutmuster zum Bilden eines Rippenmusters, das auf der Oberfläche des Stempelteils (14) vorgesehen ist, oder einen ausgesparten Teil zum Bilden eines Doms, der auf der Oberfläche des Stempelteils (14) vorgesehen ist, aufweist.

5. Verfahren zur Herstellung nach Anspruch 4,
wobei das Nutmuster ein oder mehrere Muster, das aus einem rechteckigen Gittermuster, einem dreieckigen Gittermuster, einem Strahlenmuster und einem Streifenmuster ausgewählt ist, einschließt.

6. Herstellungsverfahren nach einem der Ansprüche 1 bis 3,
wobei die Oberfläche des Stempelteils (14) flach ist.

7. Verfahren zur Herstellung nach einem der Ansprüche 1 bis 3,
wobei der Kern (10) einen Vorsprung oder eine Vertiefung aufweist, der bzw. die auf der Oberfläche des Stempelteils (14) vorgesehen ist.

8. Verfahren zur Herstellung nach einem der Ansprüche 1 bis 7,
wobei die Oberfläche des Kerns (10) vor dem Formschritt mit einer Sperrfolie (18) bedeckt wird.

9. Herstellungsverfahren nach einem der Ansprüche 1 bis 8,
wobei die Prepreg-Vorform (20) ein SMC umfasst.

10. Herstellungsverfahren nach einem der Ansprüche 1 bis 9,
wobei der Kern (10) vor dem Formschritt vorgewärmt wird.

11. Herstellungsverfahren nach einem der Ansprüche 1 bis 10,
wobei ein Polyolefinwachs dem ersten Wachsmaterial beigemischt wird.

12. Verfahren zur Herstellung nach Anspruch 11,
wobei ein Polypropylenwachs oder ein Polyethylenwachs dem ersten Wachsmaterial als das Polyolefinwachs beigemischt wird.

13. Herstellungsverfahren nach einem der Ansprüche 11 oder 12,
wobei das zweite Wachsmaterial eine organische Verbindung enthält, die eine polare Gruppe aufweist.

14. Verfahren zur Herstellung nach einem der Ansprüche 1 bis 13,
wobei eines oder beide von dem ersten Wachsmaterial und dem zweiten Wachsmaterial ein Farbmittel enthalten, sodass das erste Wachsmaterial und das zweite Wachsmaterial visuell unterscheidbar sind.

15. Verfahren zur Herstellung nach einem der Ansprüche 1 bis 14,
wobei der Expansionsteil (12) Partikel eines Materials, das die Eigenschaft aufweist, in einem hochfrequenten elektromagnetischen Feld Wärme zu erzeugen, oder Partikel eines Materials, das die Eigenschaft aufweist, Mikrowellen zum Erzeugen von Wärme zu absorbieren, enthält.

## Revendications

1. Procédé de fabrication permettant de fabriquer un article en résine renforcé par des fibres (1), le procédé de fabrication comprenant :
une étape de moulage consistant à chauffer, dans un moule métallique de pressage (100), une préforme (20) de préimprégné conjointement avec un noyau (10) comprenant un matériau cireux afin d'obtenir un produit durci (30) ; et
une étape de retrait de noyau consistant à retirer le noyau du produit durci,
dans lequel le noyau (10) présente une partie d'expansion (12) comprenant un premier matériau cireux et une partie de matrice de pressage (14) comprenant un deuxième matériau cireux qui est incompatible avec le premier matériau cireux, la partie de matrice de pressage (14) est disposée sur une surface du noyau (10), et une portion reflétant une forme d'une surface de la partie de matrice de pressage (14) est formée sur une surface du produit durci (30),
**caractérisé en ce que** le premier matériau cireux présente une température de ramollissement inférieure à celle du deuxième matériau cireux.

2. Procédé de fabrication selon la revendication 1,
dans lequel la partie d'expansion (12) n'est pas exposée sur la surface du noyau (10).

3. Procédé de fabrication selon la revendication 1 ou la revendication 2,
dans lequel le noyau (10) présente en outre une partie à faible expansion (16) comprenant le deuxième matériau cireux présentant une température de ramollissement supérieure à celle du premier matériau cireux à l'intérieur de la partie d'expansion.

4. Procédé de fabrication selon l'une quelconque des revendications 1 à 3,
dans lequel le noyau (10) présente une rainure (G) pour former une nervure (R), qui est prévue sur la surface de la partie de matrice de pressage (14), ou un motif de rainures pour former un motif de nervures, qui est prévu sur la surface de la partie de matrice de pressage (14), ou une partie évidée pour former un bossage, qui est prévue sur la surface de la partie de matrice de pressage (14).

5. Procédé de fabrication selon la revendication 4,
dans lequel le motif de rainures inclut un ou plusieurs motifs sélectionnés parmi un motif en treillis rectangulaire, un motif en treillis triangulaire, un motif rayonnant, et un motif en bandes.

6. Procédé de fabrication selon l'une quelconque des revendications 1 à 3,
dans lequel la surface de la partie de matrice de pressage (14) est plane.

7. Procédé de fabrication selon l'une quelconque des revendications 1 à 3,
dans lequel le noyau (10) présente une saillie ou un creux, qui est prévu(e) sur la surface de la partie de matrice de pressage (14).

8. Procédé de fabrication selon l'une quelconque des revendications 1 à 7,
dans lequel la surface du noyau (10) est couverte d'un film barrière (18) avant l'étape de moulage.

9. Procédé de fabrication selon l'une quelconque des revendications 1 à 8,
dans lequel la préforme (20) de préimprégné comprend un SMC.

10. Procédé de fabrication selon l'une quelconque des revendications 1 à 9,
dans lequel le noyau (10) est préchauffé avant l'étape de moulage.

11. Procédé de fabrication selon l'une quelconque des revendications 1 à 10,
dans lequel une cire polyoléfinique est mélangée dans le premier matériau cireux.

12. Procédé de fabrication selon la revendication 11,
dans lequel une cire de polypropylène ou une cire de polyéthylène est mélangée dans le premier matériau cireux en tant que cire polyoléfinique.

13. Procédé de fabrication selon l'une quelconque des revendications 11 ou 12,
dans lequel le deuxième matériau cireux contient un composé organique présentant un groupement polaire.

14. Procédé de fabrication selon l'une quelconque des revendications 1 à 13,
dans lequel l'un ou les deux matériaux parmi le premier matériau cireux et le deuxième matériau cireux contiennent un agent colorant de sorte que le premier matériau cireux et le deuxième matériau cireux sont visuellement distinguables.

15. Procédé de fabrication selon l'une quelconque des revendications 1 à 14,
dans lequel la partie d'expansion (12) contient des particules d'un matériau ayant une propriété de générer de la chaleur dans un champ électromagnétique à haute fréquence, ou des particules d'un matériau ayant une propriété d'absorber des micro-ondes pour générer de la chaleur.
